(19) **Europäisches Patentamt / European Patent Office / Office européen des brevets**

(11) **EP 1 662 834 B1**

(12) **EUROPEAN PATENT SPECIFICATION**

(45) Date of publication and mention
of the grant of the patent:
**09.01.2008 Bulletin 2008/02**

(51) Int Cl.:
*H04Q 7/38* (2006.01)          *H04Q 7/36* (2006.01)

(21) Application number: **04425874.7**

(22) Date of filing: **24.11.2004**

(54) **Dynamic channel selection based on interference and spectral usage in a multicarrier cellular communication system**

Dynamische Kanalzuteilung basierend auf Interferenz und spektrale Nutzung in einem zellularen Mehrfachträgerkommunikationssystem

Attribution dynamique de canaux basée sur l'interférence et l'utilisation du spectre des frequences radio dans un système cellulaire multiporteuse de télécommunications

(84) Designated Contracting States:
**AT BE BG CH CY CZ DE DK EE ES FI FR GB GR HU IE IS IT LI LU MC NL PL PT RO SE SI SK TR**

(43) Date of publication of application:
**31.05.2006 Bulletin 2006/22**

(73) Proprietor: **Siemens S.p.A.**
**20126 Milano (IT)**

(72) Inventors:
• **Gangai, Stefano**
**20127 Milano (IT)**
• **Laghigna, Massimo**
**27029 Vigevano (PV) (IT)**
• **Montanari, Fabio**
**20080 Basiglio (IT)**

(56) References cited:
**EP-A- 1 361 769          US-A- 5 956 642**
**US-A1- 2001 038 630**

## Description

<u>Field of the Invention</u>

The present invention refers to digital cellular communications systems and is particularly concerned with a method and an apparatus for channel selection in one such system.

More specifically, the invention can be applied in digital cellular systems with the following physical layer characterisation:

- time division duplexing (TDD), i.e. different time slots of the radio frame are allotted to uplink and downlink transmission;
- frequency division, time division and code division multiple access (FDMA, TDMA and CDMA), i.e. a basic radio resource unit is identified by one frequency, one time slot and one code;
- reuse of frequencies theoretically equal to 1, i.e. adjacent cells can be equipped with the same set of frequencies;
- splitting of the radio channels (channel = frequency/time slot) among adjacent cells based on a Channel Segregation algorithm, i.e. each cell tends to use the less interfered channels and mutually interfering cells tend to share in a dynamic and adaptive way the available channels according to the current traffic conditions and to the cell-specific radio environments.

UMTS (Universal Mobile Telecommunication System) TD-CDMA, described in 3GPP (Third Generation Partnership Project) Specifications, and TD-SCDMA (TD-Synchronous CDMA), described in CWTS (China Wireless Telecommunication System) Specifications, can be mentioned as examples of systems meeting the above requirements.

<u>Background of the Invention</u>

The radio resources in digital cellular communications systems are limited, like in any radio communication system, and therefore a same frequency can be allotted to different cells according to specific rules depending on the kind of system.

As a consequence, different user equipments (UEs) can use the same frequency at the same time and interference among the respective signals can arise when the users are sufficiently close to one another.

This problem becomes even more critical in the systems the present invention refers to, as in principle the same frequency can be equipped on adjacent cells.

Moreover, the signals can be subjected to other kinds of noise and distortion, affecting their quality.

In order to be allocable to a communication, a radio channel must meet certain interference and quality criteria.

Since the channel conditions vary in time and with the user position, it is customary to split the radio channels among adjacent cells (Channel Segregation) and to allocate the radio channels to the requesting UEs (Channel Selection) according to a dynamic process, generally called DCA (Dynamic Channel Allocation), based on measurements of the interference and/or the carrier-to-interference ratio carried out by both the UEs (for the downlink direction) and the base stations (for the uplink direction).

For the DCA, some systems directly exploit the measurements of interference and carrier-to-interference ratio, as disclosed for instance in US-A 5 956 642.

Other systems exploit the so-called "priority", which is a parameter representative of the probability that in a certain channel of a cell the interference generated by other cells or frequencies is lower than a given threshold.

Examples of the latter systems is disclosed in the document "Channel Segregation, a Distributed Adaptive Channel Allocation Scheme for Mobile Communication Systems", by Y. Furuya and Y. Akaiwa, IEICE Transactions, Vol. E 74, No. 6, June 1991, pp. 1531-1537, and in EP-A 1 198 964.

As a non-limiting assumption, the system concerned by the present invention is supposed to exploit the priority in order to perform the DCA. The skilled in the art will have of course no difficulties in adapting the formulation of the invention provided hereinbelow to other systems with DCA based on different mechanisms.

The invention is focused on that part of DCA that is in charge of allocating radio resources to a UE requesting a service (channel selection).

As a general criterion, channel selection should try to:

1) minimise the overall interference level experienced by the users, and
2) optimise the use of the available bandwidth (or, in other words, maximise the number of served users).

According to the current state of the art, the channel selection algorithm generally allocates to any incoming UE the less interfered channels (i.e. the channels with the highest priority values, with the assumptions made above for the present invention) based on the output provided by the channel segregation. An example of such a state of the art is disclosed in EP-A 1 204 287.

As a matter of fact, it can be easily proved that an algorithm performed according to such a rough criterion allows the network to optimise the channel segregation process and to minimise the overall interference level experienced by the users, but leads to a waste of bandwidth or, in other words, to a reduction of the number of served users with respect to the theoretical one.

More generally, it can be also proved that requirements 1) and 2) mentioned above cannot be fulfilled at the same time, i.e. any algorithm which guarantees the minimisation of the overall interference level experienced by the users cannot maximise the number of served users, and vice versa.

Moreover, besides the criteria related to interference and bandwidth, the selection of radio resources to be allocated to a given UE should keep some UE-specific parameters into account, like the pathloss experienced by the UE, the UE spacing constraints at the switching points (i.e. the impossibility, for certain UEs, of an immediate switching between the two communication directions) and the UE multi-slot capabilities.

Those latter aspects are left at present uncovered by the channel selection algorithms disclosed in literature.

US A-2001/038630 discloses a method and an apparatus for channel allocation in TDMA multicarrier cellular systems aiming at maximising the downlink throughput across the multiple carriers in a cell, by organising the information to be transmitted to the users into a particular frame/multiframe structure and by acting on the information processing chain. This entails a modification of the existing standards. The resources allocated to the users can be on multiple carriers, Allocation of uplink resources, and hence evaluation of uplink channel quality, is not considered, so that the capabilities and constraints of mobile devices for high data rate service in a TDD standard are not taken into account and the problem of co-channel interference generated by adjacent cells when channel reuse is substantially equal to 1 is not addressed.

EP-A-1 361 789 discloses a method and an apparatus for dynamic frequency allocation to packet services in FDD systems based on a splitting of the time slots in a TDMA frame into a "shared territory", where the time slots can be shared by different connections and use a pre-allocated frequency, and a "dedicated territory", where the time slots can be used for only one connection at a time and use a frequency selected by the allocation algorithm so as to maximise the C/I ratio. An a-priori splitting of the radio resources decreases efficiency in bandwidth exploitation when mixed services like speech and data are possible in a cell.

Object of the Invention

The present invention just aims at overcoming the problems and drawbacks of the prior art, by providing a refined and complete algorithm of channel selection, which is specific for a TDD system which: enhances the channel segregation principle; does not require modifications to the existing standards; allocates to a user a set of radio resources that: is independent of the kind of service, represents the best trade-off between the needs of minimising the overall interference level experienced by the users and of maximising the number of served users, and keeps the capabilities and constraints of the user equipment into account.

Summary of the Invention

The above objects are achieved by a method for channel allocation in a system operating in time division duplexing and requiring allocations comprising each resource units belonging to one or more uplink and downlink time slots on a same carrier, comprising the steps of:

- computing, for each possible allocation on a carrier, one or more values of an interference-related quantity, including: a first overall value, which is computed for candidate allocations using a same number of resource units and by considering all time slots concerned by an allocation; an average value, which is computed over all time slots concerned by an allocation and is weighted by the number of resource units concerned by the allocation; and a second overall value, which is computed by considering all time slots on the carrier,
- identifying the allocation on each carrier which exhibits the best interference characteristics in terms of at least some of said values of said interference-related quantity; and
- computing a resource unit availability on the respective carrier and selecting, for the actual allocation, the carrier exhibiting the minimum resource unit availability.

The invention also provides an apparatus for implementing the method, comprising:

- arithmetic means for computing: a first overall value of an interference-related quantity, which first overall value is computed for each candidate allocation by considering allocations using a same number of resource units and all time slots concerned by an allocation; an average value of said interference-related quantity, which average value is computed for each candidate allocation over all time slots concerned by the allocation and is weighted by the number of resource units concerned by the allocation; a second overall value of said interference-related quantity, which second overall value is computed for each carrier providing a candidate allocation by considering all time slots on the carrier; and a value of an available capacity on each carrier providing a candidate allocation; and

- processing means arranged to: receive from said arithmetic means said computed values of said interference-related quantity and of the available capacity; identify on each carrier the allocation which exhibits the best <u>interference characteristics in terms of computed values of said interference-related quantity;</u> and to select as the actual allocation, among the best allocations so identified, the one provided by the carrier having the maximum resource occupation.

By acting in this manner, a carrier partitioning among the cells and a carrier-based user clustering in each cell are obtained. In this manner the exploitation of the bandwidth is optimised and the probability that in a generic time instant the network bandwidth availability allows allocating whatever (in terms of number of requested radio resources) service is maximised.

Brief description of the drawings

A preferred embodiment of the invention, given by way of non-limiting example, will now be disclosed with reference to the accompanying drawings, in which:

- Fig. 1 is a block diagram of a channel selection apparatus according to the invention;
- Fig. 2 is a general flow chart of the method of the invention;
- Fig. 3 is a flow chart of the operations relevant to the best allocation identification on a carrier assigned to a cell;
- Fig. 4 is a flow chart of the operations relevant to the carrier selection; and
- Fig. 5 is a flow chart of a carrier selection phase enhanced by a reshuffling of the users, to allow for a channel reuse.

Description of the preferred embodiments of the Invention

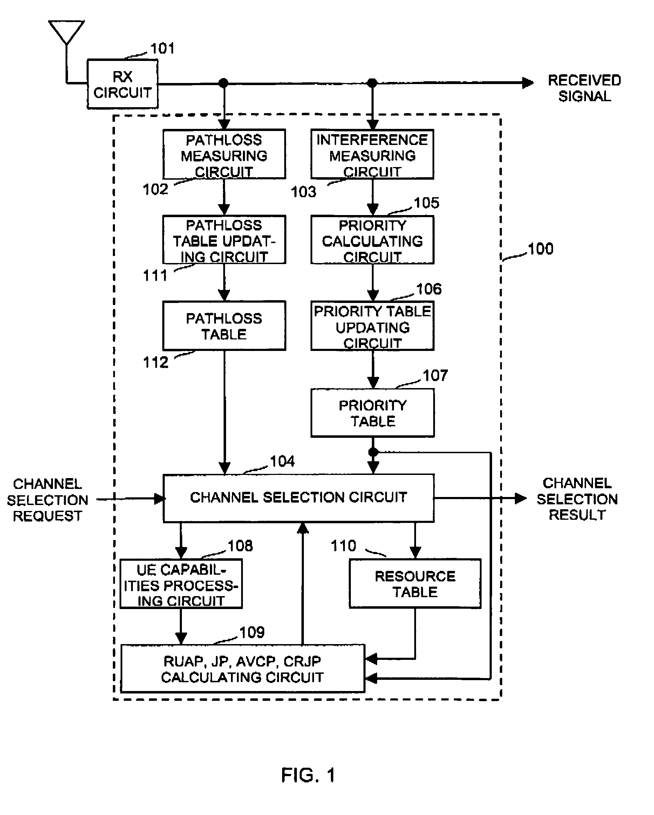

In Fig. 1, the apparatus for implementing the channel selection according to the invention is generally denoted 100. As said before, the cellular system in which apparatus 100 is to operate is a TDD multi-carrier, multi-slot cellular communication system, for instance a system conforming to 3GPP or CWTS specifications. By using the terminology of 3rd generation systems, apparatus 100 is part of the radio network control of the system.

It is implicitly assumed that the system concerned provides for a reuse of frequencies theoretically equal to 1 and a splitting of the radio channels among adjacent cells based on a conventional channel segregation algorithm.

No hypotheses are needed for the number of uplink and downlink time slots per radio frame, nor for the number and the locations of the switching points, nor yet for the number of frequencies equipped in the cells, since those features are not at all concerned by the invention.

Apparatus 100 is coupled to the output of a receiver 101, providing the received signal to be suitably processed, e.g. despread, demodulated, etc.

Suitable separation circuits (not shown) extract from the received uplink signal flow the information allowing determining the pathloss and the interference of the communication and send such information to a pathloss measuring circuit 102 and an interference measuring circuit 103 in apparatus 100.

The results of the pathloss measurements are written into a pathloss table 112 through a pathloss table updating circuit 111 and are read by a processing unit 104 (channel selection unit), which is the unit actually implementing the channel selection algorithm.

The results of interference measurements, in the preferred embodiment of the invention, are converted by priority calculation circuit 105 into priority values. The priority values are written into a priority table 107 through a priority updating circuit 106 and are read by channel selection unit 104. The manner in which the priority can be calculated and updated is well known to the skilled in the art and is described for instance in the document by Furuya et al. or in EP-A 1 204 287 mentioned above.

The manner in which the priority and the pathloss values are exploited by channel selection unit 104 will be explained below.

Channel selection unit 104 processes the channel selection requests coming from the users and aims at allocating services in the frequency-time-code matrix in such a way that:

- services are allocated in time slots with higher priority;
- services in higher priority time slots have higher pathloss.

The algorithm should work trying to achieve in a dynamic and adaptive way:

- a channel partitioning, i.e. adjacent cells achieve dynamically a splitting (segregation) of the channels used to serve UEs located in mutually interfered areas, wherein the splitting tends to assign the channels to adjacent cells proportionally to the offered traffic and to allow a cell to use the less interfered channels;
- a channel reuse, i.e. the same channels are reused by adjacent cells to serve UEs located in areas not affected by inter-cell interference.

The channel partitioning involves two aspects: carrier partitioning and carrier based user clustering.

The carrier partitioning aims at splitting whole carriers rather than individual time slots among adjacent cells. Indeed, taking into account that a service request must be serviced by time slots on a single carrier, this choice:

- makes easier for channel selection to meet the UE spacing constraints at the switching points;
- makes easier for channel selection to allocate the services exploiting the UE multi-slot capabilities; and
- decreases the frequency switching as a consequence of time slot changes in case a dynamic frequency allocation is applied.

In order to meet this requirement channel selection shall allocate new services on the carrier with the highest overall priority.

The carrier based user clustering aims at clustering the users of a cell on a per carrier basis (i.e. the users distribution over the carriers shall be as less uniform as possible), due to the following reasons:

- it makes easier to achieve the carrier partitioning;
- it decreases the probability that, even if the overall bandwidth provided by the time slots of a cell is higher than the bandwidth requested by the incoming service, the service can not be allocated because the bandwidth provided by each individual carrier is not enough.

In order to meet that requirement, the channel selection shall allocate new services on the carrier with the highest number of allocated users.

Note that carrier based user clustering is a special case of time slot based user clustering, in the sense that clustering the users on a carrier leads also to a clustering in the individual time slots. This feature makes achieving channel segregation easier.

Channel reuse is an optional requirement. The basic criterion adopted to achieve reuse is assigning the channels with higher priority values to the UEs with higher pathloss values: this is dictated by the fact that it is likely that such higher pathloss users are farther from the base station, so that they are potentially more subject to inter-cell interference than UEs with low pathloss, which are likely closer to the base station. This requirement is met by means of user reshuffling processes.

For identifying a channel, unit 104 must select uplink and downlink time slots (TS) guaranteeing the service being requested, taking into account that the basic resource units (RUs), i.e. the codes, to be allocated for each direction may belong to different time slots but must be on a same carrier. Each subset of time slots in the radio frame that can be used for the allocation of a service on a carrier will be referred to in the following description as "service allocation". Essentially, a service allocation is thus a set of time slots meeting the following conditions:

- at least one uplink time slot and one downlink time slot are included in the set;
- the number of unused resources available in the time slots set is at least equal to the number of the resources requested by the service;
- each time slot in the set passes the admission control, i.e. its priority is higher than a minimum priority threshold, configurable via O&M (Operation and Maintenance) for both the uplink and the downlink time slots, respectively.

A service allocation provides also information about the total number of basic radio resource units to be used in each time slot of the set.

In the most general case, a number of different service allocations could be available on a carrier and, if the cell is equipped with more than one carrier, service allocations may be available on several carriers. Thus, channel selection unit 104 must compare the service allocations available.

Moreover, as stated before, the channel selection method of the invention also takes into account UE-specific requirements concerning the UE spacing constraints at the switching points and the UE multi-slot capabilities in both uplink and downlink direction. For a given carrier Ci, a given service and a given UE, the term "suitable allocation" will be used in the following description and in the flow charts to denote a service allocation meeting also such UE-specific requirements.

The information necessary for taking into account those further requirements are extracted by channel selection unit 104 from the channel selection request and are processed in UE-capabilities processing circuit 108.

For selecting the channel to be allocated to an incoming request, channel selection unit 104 will have to compare the different suitable allocations identified. For such a comparison, unit 104 evaluates the following quantities:

1) Resource Unit Average Priority (RUAP), given by.

$$\mathrm{RUAP(service\_allocation)} = \frac{\sum_{TSi \in service\_allocation} P(TSi) \cdot num\_RU(TSi)}{\sum_{TSi \in service\_allocation;} num\_RU(TSi)} \qquad (1)$$

where:

- P(TSi) is the priority value of a time slot i candidate for the service allocation;
- num_RU(TSi) the number of RUs allocated to the service in time slot i. RUAP is thus a weighted average of the priority, computed over all time slots concerned by a service allocation.

2) Joint Priority (JP) of all time slots used for a service allocation, i.e.:

$$\mathrm{JP(service\_allocation)} = \prod_{TSi \in service\_allocation} P(TSi) \qquad (2)$$

JP is a quantity that can be evaluated for allocations having the same number of time slots.

3) carrier AVailable CaPacity (AVCP), given by:

$$\mathrm{AVCP(Ci)} = \sum_{TSi \in Ci; P(TSi) \geq MinPr} num\_available\_RU(TSi) \qquad (3)$$

where:

- Ci is a generic carrier equipped in the cell;
- MinPr is the minimum priority threshold mentioned above;
- num_available_RU(TSi) the number of RUs in idle state in time slot i of a carrier.

4) CaRrier Joint Priority (CRJP), given by

$$\mathrm{CRJP(Ci)} = \prod_{TSi \in Ci} P(TSi) \qquad (4)$$

Quantities RUAP, JP, AVCP, CRJP are calculated by an arithmetic unit 109, which has access for reading to priority table 107 and to a resource table 110, written by channel selection circuit 104 and including e.g. information about the idle/busy status of any resource and, for busy resources, about the active channel currently using them. Moreover, arithmetic unit 109 receives the output of circuit 108 processing the UE capabilities.

As usual, the result of the channel selection is communicated by the Radio Network Control to the Node B and then forwarded to the UE.

The algorithm according to the invention is now disclosed in more detail.

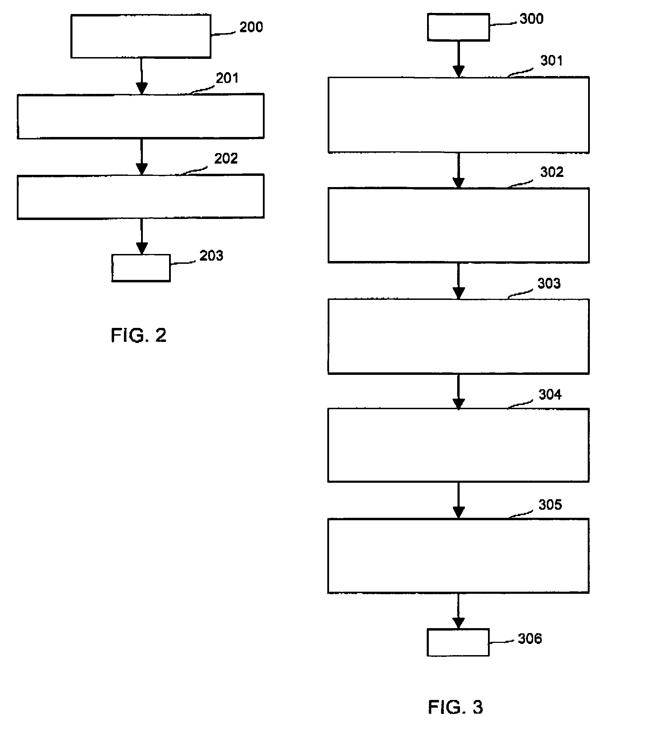

As shown in Fig. 2, the algorithm is started by a band request by a user, hereinafter referred to as "new user". The request can arrive from either a user becoming active or an already active user needing further resources. Essentially, the algorithm comprises two steps. The first step 201 is the determination of the best allocation on each carrier that may support the service, that is the determination of the time slots and the codes. The second step 202 is the carrier selection, resulting in the final channel allocation. Of course, it may happen that no carrier can offer a service allocation, in which case the allocation fails and the request is rejected.

The determination of the best allocation on a carrier is now described with reference to Fig. 3.

After the start (step 300, corresponding to step 200 of Fig. 2), the first step 301 is the identification of the suitable allocations on the carrier.

Assuming that more than one suitable allocation has been found at step 301, a priority-based comparison among the different options is effected. To this aim, the suitable allocations returned by step 301 are clustered according to the number of time slots used (step 302), JP is computed for the suitable allocations in a same cluster (step 303) and the suitable allocation with the maximum JP is selected (step 304) for each cluster. If more than one cluster has been built at step 302, and hence more than one suitable allocation has been found at step 304, the allocation with maximum RUAP is selected at step 305 as the best allocation for carrier Ci. The process for carrier Ci is thus terminated (step 306).

Of course, if only one set is found at step 301, the search for the best allocation is immediately concluded. Similarly, if only one cluster is returned by step 302, step 304 gives the best allocation for the carrier.

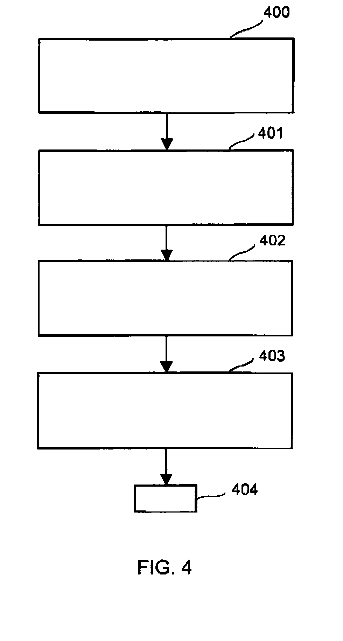

For the carrier selection (Fig. 4), the algorithm starts (step 400) when the algorithm of Fig. 3 has run for all carriers. If only one allocation has been found, that allocation will be of course the final one.

Let be S(new_user) the set of best allocations found with the best allocation search on the different carriers.

Assuming that S(new_user) contains more than one best allocation, at step 401 the RUAPs of such allocations are evaluated to create two subsets S1(new_user), S2(new_user) of best allocations.

More particularly, S1(new_user) is the subset of best allocations having a respective RUAP fulfilling the following inequality:

$$\text{RUAP(best\_allocation(Ci))} \geq \{\max_j [\text{RUAP(best\_allocation(Cj))}]\} \cdot \theta \qquad (5)$$

where $\theta$ is an O&M parameter, whose value ranges from 0 to 1. S2(new_user) is the subset of the remaining best allocations in S(new_user). The meaning of parameter $\theta$, referred to as "priority by-pass factor" in the flow chart, will be discussed below.

Then set S(new_user) is ordered as follows (step 402):

- the best allocations in S1(new_user) are considered with priority over the ones in S2(new_user);
- among the best allocations in S1(new_user), those related to the carriers with higher CRJP value are considered first, that is the allocations are sorted in descending order of CRJP (this implements the Carrier Partitioning criterion);
- if the previous comparison returns more than one best allocation, those related to the carriers with lower AVCP value are considered first (sorting in descending order of occupation: this implements the Carrier Based User Clustering criterion);
- the best allocations in S2(new_user) are ordered according to a decreasing RUAP value criterion.

The first best allocation in S(new_user) according to its ordering is then selected to allocate the service for the new_user (step 403) and the algorithm ends (step 404).

From the above considerations, it follows that parameter $\theta$ allows the operator to decide whether, and to what extent, to take into account the carrier-related parameters. Otherwise stated, $\theta$ allows the operator to "adjust" the trade-off between minimisation of the interference and maximisation of bandwidth exploitation. In general, $\theta$ is always set close to 1, which corresponds to allotting the greatest importance to minimisation of interference.

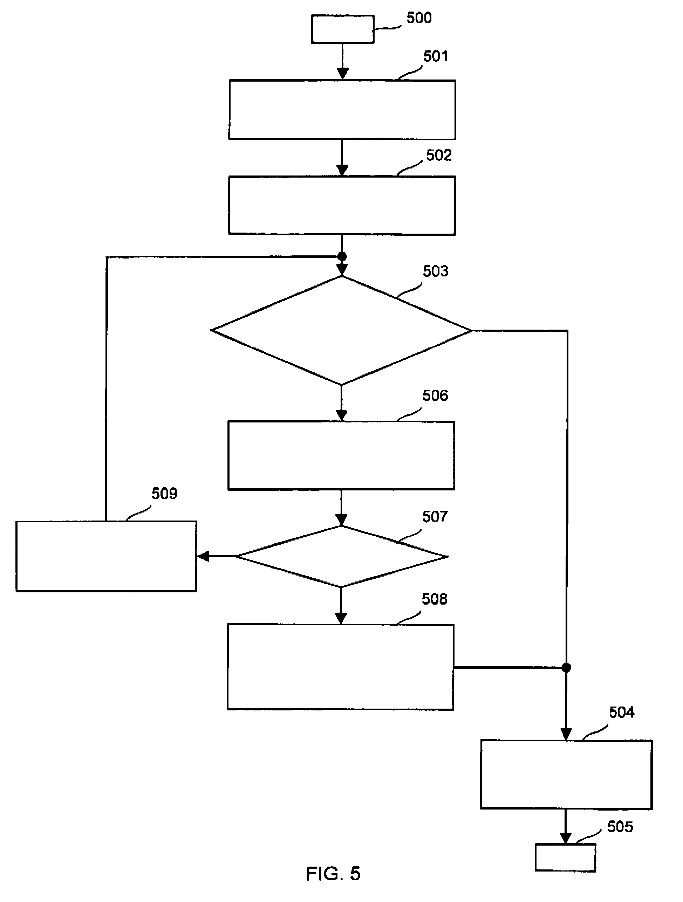

An enhancement of the method supports also the channel reuse requirement. The enhanced embodiment provides for a reshuffling of active users during the carrier selection. To this aim, channel selection unit 104 may command the handover to a lower priority channel of an already active user whose current pathloss is sufficiently lower than the pathloss of the new user. Also this contributes to optimising bandwidth exploitation. The enhanced embodiment is disclosed with reference to Fig. 5.

The start at step 500 is again the band request by the new user. At step 501, a user candidate to handover is searched for. This user is the user whose allocation has the currently highest RUAP value among the users active in the cell that experience a pathloss PL such that

$$\text{PL} < \text{PL(new\_user)} - \text{PL\_}\Delta \qquad (6)$$

where PL(new_user) is the current pathloss of the user requesting allocation and $PL\_\Delta$ is an O&M parameter.

If Ck is the carrier this user (if it exists) is allocated on, the user so found will be denoted as HO_candidate_ user(Ck).

Then, the operations described above for the basic algorithm are performed (as shortly indicated by "Allocation Selection" in step 502) until identification of the first best allocation in the ordered set S(new_user). The best allocation so identified will be referred to as "current best allocation". For carrier Ck the algorithm of search of the best allocation runs as if the resources used by HO_candidate_user(Ck) were available for the new user, so that the current best allocation is only a potential allocation for the service.

Then, at step 503, it is checked whether the current best allocation uses any resource already in use by HO_ candidate_user(Ck) or not.

A negative outcome of the check denotes that the current best allocation either relates to a carrier Ci # Ck, or uses other time slots and/or codes, on carrier Ck, than those used by HO_candidate_user(Ck): under such conditions, the current best allocation is selected to allocate the service for the new user (step 504) and the algorithm ends (step 505).

If the current best allocation in S(new_user) uses some resources already in use by HO_candidate_user(Ck), the best reallocation for HO_candidate_user(Ck) must be found. To this aim, the algorithm of Fig. 3 is run again for all carriers (step 506). The suitable allocations examined in the present case will be allocations having the same characteristics as that presently used by HO_candidate_user(Ck). On carrier Ck the algorithm now runs by marking as busy the resources involved in the current best allocation selected for the new user. As a result of the algorithm, a set S(HO_ candidate_user) of allocations is possibly built with the same criteria seen for building S(new_user).

At step 507 there is checked whether the possibility of reallocating HO_candidate_user(Ck) actually exists, i.e. whether S(HO_candidate_user) is not empty. If S(HO_candidate_user) is not empty, the same principles disclosed in connection with the carrier selection in the basic algorithm are followed for the reallocation, that is, S(HO_candidate_ user) is ordered as described above and the first best allocation in ordered S(HO_candidate_user) is selected for reallocation of HO_candidate_user(Ck) (step 508). Once HO_candidate_user(Ck) has been reallocated, the current best allocation is allocated to the service for the new user (step 504), as before.

If S(HO_candidate_user) is empty, handover of HO_candidate_user(Ck) to make available resources for new user is not possible. If the tested best allocation in S(new_user) was the only one, the service request is rejected. Otherwise, the second best allocation in the ordered set S(new_user) is considered (step 509) and the algorithm is repeated from step 503 as before. The cycle through steps 503 - 506 - 507 - 509 is iterated until a non-empty set S(HO_ candidate_user) is found or until the last best allocation in S(new_user) has been used with negative outcome. In the latter case, the service is rejected.

It is of course to be appreciated that the algorithm stops also when no further best-allocation in S(new_user) is available, even if this has not been shown for sake of simplicity of the drawing.

It is evident that the above description has been given only by way of non-limiting example, and that changes and modifications are possible without departing from the scope of the claims.

ANNEX

LEGENDS OF FIGS. 2 TO 5

FIG. 2

200: START (BAND REQUEST)
201: DETERMINATION OF THE BEST ALLOCATION ON EACH CARRIER
202: CARRIER SELECTION
203: STOP

FIG. 3

300: START
301: IDENTIFICATION OF SUITABLE_ALLOCATIONS ON CARRIER Ci
302: CLUSTERING OF SUITABLE_ ALLOCATIONS ON A PER NUMBER OF INVOLVED TIMESLOTS BASIS
303: JP IS COMPUTED FOR CLUSTERED SUITABLE_ALLOCATIONS
304: SUITABLE-ALLOCATION WITH MAXIMUM JP IS SELECTED IN EACH CLUSTER

305: SUITABLE_ALLOCATION WITH MAXIMUM RUAP IS SELECTED AS BEST_ALLOCATION FOR CARRIER Ci
306: STOP

FIG. 4

400: START [BUILDING OF S(NEW_USER) WITH BEST_ALLOCATIONS OF ALL CARRIERS]
401: EVALUATE RUAP OF BEST_ ALLOCATIONS IN S(NEW_USER) ACCORDING TO PRIORITY BY-PASS FACTOR
402: ORDER S(NEW_USER) FIRST ACCORDING TO EVALUATION ABOVE, THEN BY CRJP, AVCP AND RUAP
403: FIRST BEST_ALLOCATION IN ORDERED S(NEW_USER) IS SELECTED AS CHANNEL FOR ALLOCATING THE SERVICE
404: STOP

FIG. 5

500: START
501: SELECTION OF HO_CANDIDATE_USER
502: ALLOCATION SELECTION FOR NEW_USER (CURRENT BEST_ALLOCATION)
503: DOES CURRENT BEST_ALLOCATION USE RESOURCES ALREADY IN USE BY HO_ CANDIDATE_USER? (NO to 504; YES to 506)
504: NEW_USER IS ALLOC-ATED ON CURRENT BEST_ALLOCATION IN S(NEW_USER)
505: STOP
506: BEST ALLOCATION SELECTION FOR HO_CANDIDATE_USER (BUILDING OF S(HO_CANDIDATE_USER))
507: IS S(HO_CANDIDATE_USER) EMPTY? (NO to 508; YES to 509)
508 S(HO_CANDIDATE_USER) IS ORDERED AND HO_CANDIDATE_ USER IS REALLOCATED ON FIRST BEST_ALLOCATION IN ORDERED S(HO_CANDIDATE_USER)
509 NEXT BEST_ALLOCATION IN ORDERED S(NEW_USER) IS SELECTED AS CURRENT BEST_ALLOCATION

**Claims**

1. A method of channel allocation to a communication service in a cell of a digital multi-carrier, multi-slot cellular communication system, which method comprises, upon receipt of a channel request from a user, the identification (301) of candidate allocations that offer the resources requested by the service and meet predetermined interference requirements, and is **characterised in that**, for channel allocation in a system operating in time division duplexing where an allocation comprises resource units belonging to one or more uplink and downlink time slots on a same carrier, it comprises the steps of:

   - computing (303, 305. 402) for each possible allocation on a carrier: a first overall value of an interference-related quantity, which first overall value is computed for candidate allocations using a same number of resource units and by considering all time slots concerned by an allocation; an average value of said interference-related quantity, which average value is computed over all time slots concerned by an allocation and is weighted by the number of resource units concerned by the allocation; and a second overall value of said interference-related quantity, which second overall value is computed by considering all time slots on the carrier,
   - identifying (201; 304, 305, 402. 403) the allocation on each carrier which exhibits the best interference characteristics in terms of at least some of the computed values of said interference-related quantity; and
   - computing (402) a resource unit availability on the respective carrier and selecting (403), for the actual allocation, the carrier exhibiting a minimum residual resource unit availability.

2. The method as claimed in claim 1, **characterised in that** the search for candidate allocations on a carrier is performed among allocations meeting spacing constraints at the switching points and multi-slot capabilities of the equipment of the requesting user.

3. The method as claimed in claim 1 or 2, **characterised in that** said first overall value is computed if multiple allocations using a same number of time slots are identified; said average value is computed if multiple allocations using different numbers of time slots are identified; said second overall value is computed if evaluation of said first overall value and/or said average value leads to the identification of best allocations on different carriers; and said resource unit availability is computed if evaluation of said second overall value still provides best allocations on different carriers.

4. The method as claimed in any preceding claim, **characterised in that** said interference-related quantity is the priority, and the best allocation on each carrier is the one exhibiting the maximum first and second overall values and the maximum average value of the priority.

5. The method as claimed in claim 4, **characterised in that** the best allocation on a carrier is determined by the following steps:

- identifying (301) sets of uplink and downlink time slots offering the necessary resource availability and meeting both priority criteria set by an admission control function of the system and the requirements in terms of spacing constraints at the switching points and multi-slot capabilities of the user equipment requesting the service;
- clustering (302) said sets by overall number of time slots used;
- computing (303) the first overall value of the priority for each cluster;
- identifying (304), for each cluster, the set of uplink and downlink time slots with maximum priority;
- selecting (305), among all sets identified at the previous step, the one that maximises the average value of the priority.

6. The method as claimed in claim 4 or 5, **characterised in that** said carrier selection is performed by the following steps:

- creating (401, 402) an ordered set of best allocations, by sorting the best allocations found by performing the best allocation searches on all carriers by descending order of: the second overall value of the priority; the number of available resource units on the carrier; the average value of the priority; and
- allocating (403) the service on the carrier providing the first best allocation in the ordered set.

7. The method as claimed in claim 5, **characterised in that** said sorting by descending order of said second overall value of the priority and of said number of available resource units is performed for a first subset of best allocations including the ones having an average value of the priority not lower than a predetermined fraction of a maximum among the average values of the priorities of all best allocations, and said ordering by descending order of said average value of the priority is made for a second subset of best allocations, including the allocations not belonging to the first subset.

8. The method as claimed in claim 6, **characterised in that** the carrier selection is performed by considering first carriers providing best allocations belonging to the first subset and then carriers providing best allocations belonging to the second subset.

9. The method as claimed in any preceding claim, **characterised in that** the resources for the candidate allocations are searched among the idle resource units.

10. The method as claimed in any of claims 1 to 8, comprising the steps of:

- checking, before starting the channel selection, whether active users exist exhibiting a pathloss sufficiently lower than that of the requesting user;
- selecting (501) one of such low-pathloss active users as a candidate for handover to a different channel;
- performing (502) the search for the best allocation on each carrier and the carrier selection for the requesting user, the allocation identified through the carrier selection being considered as a potential allocation for the requesting user;
- if said potential allocation requires use of resources already occupied by said user candidate for handover, identifying (506) a new allocation for said candidate user; and
- if identification of a new allocation for said candidate user is successful, handovering (508) said candidate user to the new allocation and allotting (504) the potential allocation to the requesting user.

11. The method as claimed in claim 10, **characterised in that**, if no new allocation is identified for said handover-candidate user, the best allocations after the first one in said ordered set of best allocations are successively tested as potential allocations for the requesting user, until finding a potential allocation which does not require use of already occupied resources or until identifying a new allocation for the handover-candidate user is successful, the service request being rejected if no such potential allocation and no such new allocation are found.

12. The method as claimed in claim 10 or 11, **characterised in that** the search for the best allocation for the requesting user on the carrier serving said handover-candidate user is performed by considering the resources allotted to the handover-candidate user as available for the requesting user, and the search for the best allocation for the handover-candidate user on said carrier is performed by considering as unavailable for the handover-candidate user the resources included in the potential allocation for the requesting user.

13. An apparatus for selecting, in radio transmission control units of a digital multi-carrier, multi-slot cellular communication system with time division duplexing, a radio channel to be allocated to a communication service in a cell, the apparatus (100) being arranged to select said channel among candidate allocations offering the bandwidth requested by the service, meeting predetermined interference requirements and comprising each resource units belonging to one or more uplink and downlink time slots on a same carrier, the apparatus (100) being **characterised in that** it comprises:

- arithmetic means (109) for computing: a first overall value of an interference-related quantity, which first overall value is computed for candidate allocations using a same number of resource units and by considering all time slots concerned by an allocation; an average value of said interference-related quantity, which average value is computed for each candidate allocation over all time slots concerned by the allocation and is weighted by the number of resource units concerned by the allocation; a second overall value of said interference-related quantity, which second value is computed for each carrier providing a candidate allocation by considering all time slots on the carrier; and a value of an available capacity on each carrier providing a candidate allocation; and
- first processing means (104) arranged to: receive from said arithmetic means (109) said computed values of said interference-related quantity and of the available capacity; identify on each carrier the allocation which exhibits the best interference characteristics in terms of computed values of said interference-related quantity; and to select as the actual allocation, among the allocations so identified, the one provided by the carrier having the maximum resource occupation.

14. The apparatus as claimed in claim 13, **characterised in that** said first processing means (104) are arranged to identify, on each carrier on which a candidate allocation is available and based on said first overall value and on said average value of said interference-related quantity, a candidate allocation which is the best one in terms of interference of the concerned time slots, and to select, for the actual allocation to the service, the carrier supporting the best candidate allocation exhibiting the best interference characteristics in terms of said second overall value of said interference-related quantity and minimising the residual available capacity on the carrier.

15. The apparatus as claimed in claim 13 or 14, **characterised in that** it further comprises second processing means (108) connected to said arithmetic means (109) and said first processing means (104) and arranged to process information about user equipment capabilities, said arithmetic means (109) being arranged to compute said values of said interference-related quantity by taking into account the user equipment capabilities.

16. The apparatus as claimed in any of claims 13 to 15, **characterised in that** said interference-related quantity is the priority.

17. The apparatus as claimed in any of claims 13 to 16, **characterised in that** said first processing means (104) are arranged also to: evaluate, upon receiving a channel allocation request from a user, the pathloss of active users and of the requesting user; identify low-pathloss active users with a pathloss sufficiently lower than that of the requesting user; select among said users a user candidate to handover to a lower priority channel; and if the channel selected for allocation to the requesting user entails use of resources already used by the low-pathloss user, to search a new allocation for the low-pathloss user, in order to make said resources available for the requesting user.

**Patentansprüche**

1. Verfahren zur Kanalzuteilung zu einem Kommunikationsdienst in einer Zelle eines digitalen zellularen Multiträger-, Multizeitlagen-Kommunikationssystems, wobei das Verfahren umfaßt, bei Empfang einer Kanalanforderung von einem Benutzer, die Identifizierung (301) von in Frage kommenden Zuteilungen, die die durch den Dienst angeforderten Ressourcen bieten und vorbestimmte Interferenzerfordernisse erfüllen, und **gekennzeichnet ist dadurch**, daß zur Kanalzuteilung in einem in Zeitduplex arbeitendem System, wo eine Zuteilung zu einer oder mehreren Aufwärts- und Abwärts-Zeitlagen auf einem gleichen Träger gehörende Recourceeinheiten umfaßt, es folgende Schritte umfaßt:

- Berechnen (303, 305, 402) für jede mögliche Zuteilung auf einem Träger: eines ersten Gesamtwertes einer interferenzbezogenen Größe, der für in Frage kommende Zuteilungen unter Verwendung einer gleichen Anzahl von Ressourceeinheiten und **durch** Berücksichtigung aller **durch** eine Zuteilung betroffenen Zeitlagen berechnet wird; eines Durchschnittswertes der interferenzbezogenen Größe, der über alle **durch** eine Zuteilung betroffene Zeitlagen berechnet wird und **durch** die Anzahl von **durch** die Zuteilung betroffenen Ressourceeinheiten gewichtet wird; und eines zweiten Gesamtwertes der interferenzbezogenen Größe, der **durch** Berücksichtigung aller Zeitlagen auf dem Träger berechnet wird;
- Identifizieren (201; 304, 305, 402, 403) der Zuteilung auf jedem Träger, der die besten Interferenzeigenschaften aufweist, hinsichtlich mindestens einiger der berechneten Werte der interferenzbezogenen Größe; und
- Berechnen (402) einer Ressourceeinheitverfügbarkeit auf dem jeweiligen Träger und Auswählen (403) für die eigentliche Zuteilung des eine minimale Rest-Ressourceeinheitsverfügbarkeit aufweisenden Trägers.

2. Verfahren nach Anspruch 1, **dadurch gekennzeichnet, daß** die Suche nach in Frage kommenden Zuteilungen auf einem Träger unter Zuteilungen durchgeführt wird, die Beabstandungsbeschränkungen an den Schaltpunkten und Multizeitlagenfähigkeiten der Einrichtung des anfordernden Benutzers erfüllen.

3. Verfahren nach Anspruch 1 oder 2, **dadurch gekennzeichnet, daß** der erste Gesamtwert berechnet wird, wenn mehrere Zuteilungen mit einer gleichen Anzahl von Zeitlagen identifiziert werden; der Durchschnittswert berechnet wird, wenn mehrere Zuteilungen mit unterschiedlichen Anzahlen von Zeitlagen identifiziert werden; der zweite Gesamtwert berechnet wird, wenn Auswertung des ersten Gesamtwertes und/oder des Durchschnittswertes zu der Identifizierung bester Zuteilungen auf unterschiedlichen Trägern führt; und die Ressourceeinheitverfügbarkeit berechnet wird, wenn Auswertung des zweiten Gesamtwertes noch beste Zuteilungen auf unterschiedlichen Trägern bereitstellt.

4. Verfahren nach einem beliebigen vorhergehenden Anspruch, **dadurch gekennzeichnet, daß** die interferenzbezogene Größe die Priorität ist und die beste Zuteilung auf jeden Träger diejenige ist, die den maximalen ersten und zweiten Gesamtwert und den maximalen Durchschnittswert der Priorität aufweist.

5. Verfahren nach Anspruch 4, **dadurch gekennzeichnet, daß** die beste Zuteilung auf einem Träger durch folgende Schritte bestimmt wird:

- Identifizieren (301) von Mengen von Aufwärts- und Abwärts-Zeitlagen, die die notwendige Ressourceverfügbarkeit bieten und sowohl die durch eine Zulassungssteuerungsfunktion des Systems gesetzten Prioritätskriterien als auch die Erfordernisse hinsichtlich der Beabstandungsbeschränkungen an den Schaltpunkten und Multizeitlagenfähigkeiten der den Dienst anfordernden Benutzereinrichtung erfüllen;
- Anhäufen (302) der Mengen durch die Gesamtzahl benutzter Zeitlagen;
- Berechnen (303) des ersten Gesamtwertes der Priorität für jede Anhäufung;
- Identifizieren (304), für jede Anhäufung der Menge, von Aufwärts- und Abwärts-Zeitlagen mit maximaler Priorität;
- Auswählen (305) unter allen im vorhergehenden Schritt identifizierten Mengen von derjenigen, die den Durchschnittswert der Priorität maximiert.

6. Verfahren nach Anspruch 4 oder 5, **dadurch gekennzeichnet, daß** die Trägerauswahl durch folgende Schritte durchgeführt wird:

- Erstellen (401, 402) einer geordneten Menge bester Zuteilungen durch Sortieren der besten Zuteilungen, die durch Durchführung der Suchungen bester Zuteilung an allen Trägern in abnehmender Reihenfolge des zweiten Gesamtwertes der Priorität, der Anzahl verfügbarer Ressourceeinheiten auf dem Träger; und des Durchschnittswertes der Priorität gefunden wurden; und
- Zuteilen (403) des Dienstes auf dem die erste beste Zuteilung in der geordneten Menge bereitstellenden Träger.

7. Verfahren nach Anspruch 5, **dadurch gekennzeichnet, daß** das Sortieren in abnehmender Reihenfolge des zweiten Gesamtwertes der Priorität und der Anzahl verfügbarer Ressourceeinheiten durch eine erste Teilmenge bester Zuteilungen einschließlich derer mit einem Durchschnittswert der Priorität, der nicht niedriger als ein vorbestimmter Bruchteil eines Höchstwertes unter den Durchschnittswerten der Prioritäten aller besten Zuteilungen durchgeführt wird, und daß das Ordnen in abnehmender Reihenfolge des Durchschnittswertes der Priorität für eine zweite Teilmenge bester Zuteilungen einschließlich der nicht zu der ersten Teilmenge gehörenden Zuteilungen durchgeführt wird.

8. Verfahren nach Anspruch 6, **dadurch gekennzeichnet, daß** die Trägerauswahl durch Berücksichtigung erster Träger durchgeführt wird, die zur ersten Teilmenge gehörende beste Zuteilungen bereitstellen und dann von Trägern, die zur zweiten Teilmenge gehörende beste Zuteilungen bereitstellen.

9. Verfahren nach einem beliebigen vorhergehenden Anspruch, **dadurch gekennzeichnet, daß** die Ressourcen für die in Frage kommenden Zuteilungen unter den freien Ressourceeinheiten gesucht werden.

10. Verfahren nach einem der Ansprüche 1 bis 8, mit folgenden Schritten:

   - Prüfen vor Beginnen der Kanalauswahl, ob aktive Benutzer existieren, die eine Übertragungsdämpfung aufweisen, die ausreichend geringer als die des anfordernden Benutzers ist,
   - Auswählen (501) eines solcher aktiver Benutzer mit niedriger Übertragungsdämpfung als in Frage kommend zur Weiterschaltung zu einem unterschiedlichen Kanal;
   - Durchführen (502) der Suche nach der besten Zuteilung auf jedem Träger und der Trägerauswahl nach dem anfordernden Benutzer, wobei die durch die Trägerauswahl identifizierte Zuteilung als eine mögliche Zuteilung für den anfordernden Benutzer in Betracht gezogen wird;
   - wenn die mögliche Zuteilung Verwendung von bereits durch den für die Weiterschaltung in Frage kommenden Benutzer belegte Ressourcen erfordert, Identifizieren (506) einer neuen Zuteilung für den in Frage kommenden Benutzer; und
   - wenn Identifizierung einer neuen Zuteilung für den in Frage kommenden Benutzer erfolgreich ist, Weiterschalten (508) des in Frage kommenden Benutzers zu der neuen Zuteilung und Zuteilen (504) der möglichen Zuteilung zu dem anfordernden Benutzer.

11. Verfahren nach Anspruch 10, **dadurch gekennzeichnet, daß**, wenn keine neue Zuteilung für den für die Weiterschaltung in Frage kommenden Benutzer identifiziert wird, die besten Zuteilungen nach der ersten in der geordneten Menge von besten Zuteilungen nacheinander als mögliche Zuteilungen für den anfordernden Benutzer geprüft werden, bis eine mögliche Zuteilung gefunden wird, die nicht die Verwendung bereits belegter Ressourcen erfordert oder bis Identifizieren einer neuen Zuteilung für den für die Weiterschaltung in Frage kommenden Benutzer erfolgreich ist, wobei die Dienstanforderung abgewiesen wird, wenn keine derartige mögliche Zuteilung und keine derartige neue Zuteilung gefunden werden.

12. Verfahren nach Anspruch 10 oder 11, **dadurch gekennzeichnet, daß** die Suche nach der besten Zuteilung für den anfordernden Benutzer auf dem den für die Weiterschaltung in Frage kommenden Benutzer versorgenden Träger durch Berücksichtigung der dem für die Weiterschaltung in Frage kommenden Benutzer als für den anfordernden Benutzer verfügbar zugeteilten Ressourcen durchgeführt wird, und die Suche nach der besten Zuteilung für den für die Weiterschaltung in Frage kommenden Benutzer auf dem Träger durch Berücksichtigung der in der möglichen Zuteilung für den anfordernden Benutzer enthaltenden Ressourcen als nicht verfügbar für den für die Weiterschaltung in Frage kommenden Benutzer durchgeführt wird.

13. Vorrichtung zum Auswählen in Funkübertragungssteuereinheiten eines digitalen zellularen Multiträger-, Multizeitlagen-Kommunikationssystems- mit Zeitduplex eines einem Kommunikationsdienst in einer Zelle zuzuteilenden Funkkanals, wobei die Vorrichtung (100) zum Auswählen des Kanals unter in Frage kommenden Zuteilungen angeordnet ist, die die durch den Dienst angeforderte Bandbreite bieten, vorbestimmte. Interferenzerfordernisse erfüllen und jeweils Ressourceeinheiten umfassen, die einem oder mehreren Aufwärts- und Abwärtszeitlagen auf einem gleichen Träger gehören, wobei die Vorrichtung (100) **dadurch gekennzeichnet, daß** sie folgendes umfaßt:

   - Arithmetikmittel (109) zum Berechnen: eines ersten Gesamtwertes einer interferenzbezogenen Größe, der für in Frage kommende Zuteilungen unter Verwendung einer gleichen Anzahl von Ressourceeinheiten und durch Berücksichtigung aller durch eine Zuteilung betroffenen Zeitlagen berechnet wird; eines Durchschnittswertes der interferenzbezogenen Größe, der für jede in Frage kommende Zuteilung über alle durch die Zuteilung betroffene Zeitlagen berechnet wird und durch die Anzahl von durch die Zuteilung betroffenen Ressourceeinheiten gewichtet wird; eines zweiten Gesamtwertes der interferenzbezogenen Größe, der für jeden eine in Frage kommende Zuteilung bereitstellenden Träger durch Berücksichtigung aller Zeitlagen auf dem Träger berechnet wird; und eines Wertes einer verfügbaren Kapazität auf jedem eine in Frage kommende Zuteilung bereitstellenden Träger; und

- erste Verarbeitungsmittel (104) angeordnet zum Empfangen von dem Arithmetikmittel (109) der berechneten Werte der interferenzbezogenen Größe und der verfügbaren Kapazität; Identifizieren auf jedem Träger der Zuteilung, die die besten Interferenzeigenschaften hinsichtlich berechneter Werte der interferenzbezogenen Größe aufweist; und zum Auswählen als Istzuteilung unter den so identifizierten Zuteilungen der durch den Träger mit der maximalen Ressourcenbelegung bereitgestellten.

14. Vorrichtung nach Anspruch 13, **dadurch gekennzeichnet, daß** das erste Verarbeitungsmittel (104) angeordnet ist zum Identifizieren auf jedem Träger, auf dem eine in Frage kommende Zuteilung verfügbar ist und auf Grundlage des ersten Gesamtwertes und des Durchschnittswertes der interferenzbezogenen Größe einer in Frage kommenden Zuteilung, die die beste hinsichtlich der Interferenz der betroffenen Zeitlagen ist und zum Auswählen für die Istzuteilung zu dem - Dienst des Trägers, der die beste in Frage kommende Zuteilung unterstützt, die die besten Interferenzeigenschaften hinsichtlich des zweiten Gesamtwertes der interferenzbezogenen Größe aufweist und die verfügbare Restkapazität auf dem Träger minimiert.

15. Vorrichtung nach Anspruch 13 oder 14, **dadurch gekennzeichnet, daß** sie weiterhin zweite, mit dem Arithmetikmittel (109) und dem ersten Verarbeitungsmittel (104) verbundene Verarbeitungsmittel (108) umfaßt und zum Verarbeiten von Informationen über Benutzereinrichtungsfähigkeiten angeordnet ist, wobei das Arithmetikmittel (109) zum Berechnen der Werte der interferenzbezogenen Größe durch Berücksichtigung der Benutzereinrichtungsfähigkeiten angeordnet ist.

16. Vorrichtung nach einem der Ansprüche 13 bis 15, **dadurch gekennzeichnet, daß** die interferenzbezogene Größe die Priorität ist.

17. Vorrichtung nach einem der Ansprüche 13 bis 16, **dadurch gekennzeichnet, daß** das erste Verarbeitungsmittel (104) auch für folgendes angeordnet ist: Auswerten bei Empfang einer Kanalzuteilungsanforderung von einem Benutzer der Übertragungsdämpfung aktiver Benutzer und des anfordernden Benutzers; Identifizieren aktiver Benutzer mit einer Übertragungsdämpfung, die genügend niedriger als die des anfordernden Benutzers ist; Auswählen unter den Benutzern eines für Weiterschaltung für einen Kanal niedrigerer Priorität in Frage kommenden Benutzers; und wenn der zur Zuteilung zu dem anfordernden Benutzer ausgewählte Kanal die Verwendung von durch den Benutzer mit geringer Übertragungsdämpfung bereits benutzter Ressourcen mit sich bringt, Suchen nach einer neuen Zuteilung für den Benutzer mit geringer Übertragungsdämpfung, um diese Ressourcen für den anfordernden Benutzer zur Verfügung zu stellen.

## Revendications

1. Procédé d'attribution de canal à un service de communication dans une cellule d'un système de communication cellulaire numérique à porteuses multiples et intervalles de temps multiples, lequel procédé comprend, à réception d'une demande de canal provenant d'un utilisateur, l'identification (301) d'attributions candidates qui offrent les ressources requises par le service et satisfont à des exigences d'interférence prédéterminées, et est **caractérisé en ce que**, pour une attribution de canal dans un système fonctionnant en duplexage par répartition dans le temps où une attribution comprend des unités de ressources appartenant à un ou plusieurs intervalles de temps montants et descendants sur une même porteuse, il comprend les étapes de :

- calculer (303, 305, 402) pour chaque attribution possible sur une porteuse : une première valeur générale d'une quantité relative à une interférence, laquelle première valeur générale est calculée pour des attributions candidates utilisant un même nombre d'unités de ressources et en considérant tous les intervalles de temps concernés par une attribution ; une valeur moyenne de ladite quantité relative à une interférence, laquelle valeur moyenne est calculée sur tous les intervalles de temps concernés par une attribution et est pondérée par le nombre d'unités de ressources concernées par l'attribution ; et une deuxième valeur générale de ladite quantité relative à une interférence, laquelle deuxième valeur générale est calculée en considérant tous les intervalles de temps sur la porteuse,

- identifier (201 ; 304, 305, 402, 403) l'attribution sur chaque porteuse qui affiche la meilleure caractéristique d'interférence en termes d'au moins certaines des valeurs calculées de ladite quantité relative à une interférence ; et

**EP 1 662 834 B1**

- calculer (402) une disponibilité d'unités de ressources sur la porteuse respective et sélectionner (403), pour l'attribution actuelle, la porteuse affichant une disponibilité résiduelle minimum d'unités de ressources.

2. Procédé selon la revendication 1, **caractérisé en ce que** la recherche d'attributions candidates sur une porteuse est effectuée parmi des attributions satisfaisant aux contraintes d'espacement aux points de commutation et aux capacités d'intervalles de temps multiples de l'équipement de l'utilisateur demandeur.

3. Procédé selon la revendication 1 ou 2, **caractérisé en ce que** ladite première valeur générale est calculée si des attributions multiples utilisant un même nombre d'intervalles de temps sont identifiées ; ladite valeur moyenne est calculée si des attributions multiples utilisant des nombres différents d'intervalles de temps sont identifiées ; ladite deuxième valeur générale est calculée si l'évaluation de ladite première valeur générale et/ou de ladite valeur moyenne conduit à l'identification des meilleures attributions sur des porteuses différentes ; et ladite disponibilité d'unités de ressources est calculée si l'évaluation de ladite deuxième valeur générale fournit encore des meilleures attributions sur des porteuses différentes.

4. Procédé selon l'une quelconque des revendications précédentes, **caractérisé en ce que** ladite quantité relative à une interférence est la priorité, et la meilleure attribution sur chaque porteuse est celle affichant les première et deuxième valeurs générales maximum et la valeur moyenne maximum de la priorité.

5. Procédé selon la revendication 4, **caractérisé en ce que** la meilleure attribution sur une porteuse est déterminée par les étapes suivantes :

- identifier (301) des ensembles d'intervalles de temps montants et descendants offrant la disponibilité de ressources nécessaires et satisfaisant à la fois aux critères de priorité fixés par une fonction de contrôle d'admission du système et aux exigences en termes de contraintes d'espacement aux points de commutation et de capacités d'intervalles de temps multiples de l'équipement de l'utilisateur demandant le service ;
- regrouper (302) lesdits ensembles par nombre général d'intervalles de temps utilisés ;
- calculer (303) la première valeur générale de la priorité pour chaque groupe ;
- identifier (304), pour chaque groupe, l'ensemble d'intervalles de temps montants et descendants avec la priorité maximum ;
- sélectionner (305), parmi tous les ensembles identifiés à l'étape précédente, celui qui maximise la valeur moyenne de la priorité.

6. Procédé selon la revendication 4 ou 5, **caractérisé en ce que** ladite sélection de porteuse est effectuée par les étapes suivantes .

- créer (401, 402) un ensemble ordonné de meilleures attributions, en triant les meilleures attributions trouvées en effectuant les recherches de meilleures attributions sur toutes les porteuses par ordre décroissant de : la deuxième valeur générale de la priorité ; le nombre d'unités de ressources disponibles sur la porteuse ; la valeur moyenne de la priorité ; et
- attribuer (403) le service sur la porteuse offrant la première meilleure attribution dans l'ensemble ordonné.

7. Procédé selon la revendication 5, **caractérisé en ce que** ledit tri par ordre décroissant de ladite deuxième valeur générale de la priorité et dudit nombre d'unités de ressources disponibles est effectué pour un premier sous-ensemble de meilleures attributions incluant celles ayant une valeur moyenne de la priorité non inférieure à une fraction prédéterminée d'un maximum entre les valeurs moyennes des priorités de toutes les meilleures attributions, et ledit ordonnancement par ordre décroissant de ladite valeur moyenne de la priorité est effectué pour un deuxième sous-ensemble de meilleures attributions, incluant les attributions n'appartenant pas au premier sous-ensemble.

8. Procédé selon la revendication 6, **caractérisé en ce que** la sélection de porteuse est effectuée en considérant les premières porteuses offrant les meilleures attributions appartenant au premier sous-ensemble et ensuite les porteuses offrant les meilleures attributions appartenant au deuxième sous-ensemble.

9. Procédé selon l'une quelconque des revendications précédentes, **caractérisé en ce que** les ressources pour les attributions candidates sont recherchées entre les unités de ressources non actives.

10. Procédé selon l'une quelconque des revendications 1 à 8, comprenant les étapes de :

- contrôler, avant de lancer la sélection de canal, si des utilisateurs actifs existent affichant un affaiblissement sur le trajet suffisamment inférieur à celui de l'utilisateur demandeur ;
- sélectionner (501) un de tels utilisateurs actifs à faible affaiblissement sur le trajet comme un candidat pour un transfert sur un canal différent ;
- effectuer (502) la recherche de la meilleure attribution sur chaque porteuse et la sélection de porteuse pour l'utilisateur demandeur, l'attribution identifiée par l'intermédiaire de la sélection de porteuse étant considérée comme une attribution potentielle pour l'utilisateur demandeur ;
- si ladite attribution potentielle requiert l'utilisation de ressources déjà occupées par ledit utilisateur candidat au transfert, identifier (506) une nouvelle attribution pour ledit utilisateur candidat ; et
- si l'identification d'une nouvelle attribution pour ledit utilisateur candidat est un succès, transférer (508) ledit utilisateur candidat sur la nouvelle attribution et allouer (504) l'attribution potentielle à l'utilisateur demandeur.

11. Procédé selon la revendication 10, **caractérisé en ce que**, si aucune nouvelle attribution n'est identifiée pour ledit utilisateur candidat au transfert, les meilleures attributions après la première dans ledit ensemble ordonné des meilleures attributions sont successivement testées comme attributions potentielles pour l'utilisateur demandeur, jusqu'à trouver une attribution potentielle qui ne requiert pas l'utilisation de ressources déjà occupées ou jusqu'à ce que l'identification d'une nouvelle attribution pour l'utilisateur candidat au transfert soit un succès, la demande de service étant rejetée si aucune telle attribution potentielle et aucune telle nouvelle attribution n'est trouvée.

12. Procédé selon la revendication 10 ou 11, **caractérisé en ce que** la recherche de la meilleure attribution pour l'utilisateur demandeur sur la porteuse desservant ledit utilisateur candidat au transfert est effectuée en considérant les ressources allouées à l'utilisateur candidat au transfert comme étant disponibles pour l'utilisateur demandeur, et la recherche de la meilleure attribution pour l'utilisateur candidat au transfert sur ladite porteuse est effectuée en considérant comme non disponibles pour l'utilisateur candidat au transfert les ressources incluses dans l'attribution potentielle pour l'utilisateur demandeur.

13. Appareil pour sélectionner, dans des unités de contrôle de transmission radio d'un système de communication cellulaire numérique à porteuses multiples et intervalles de temps multiples avec un duplexage par répartition dans le temps, un canal radio devant être attribué à un service de communication dans une cellule, l'appareil (100) étant agencé pour sélectionner ledit canal parmi des attributions candidates offrant la largeur de bande requise par le service, satisfaisant à des exigences d'interférence prédéterminées et comprenant chacune des unités de ressources appartenant à un ou plusieurs intervalles de temps montants et descendants sur une même porteuse, l'appareil (100) étant **caractérisé en ce qu'**il comprend :

    - un moyen arithmétique (109) pour calculer : une première valeur générale d'une quantité relative à une interférence, laquelle première valeur générale est calculée pour les attributions candidates utilisant un même nombre d'unités de ressources et en considérant tous les intervalles de temps concernés par une attribution ; une valeur moyenne de ladite quantité relative à une interférence, laquelle valeur moyenne est calculée pour chaque attribution candidate sur tous les intervalles de temps concernés par l'attribution et est pondérée par le nombre d'unités de ressources concernées par l'attribution ; une deuxième valeur générale de ladite quantité relative à une interférence, laquelle deuxième valeur est calculée pour chaque porteuse offrant une attribution candidate en considérant tous les intervalles de temps sur la porteuse ; et une valeur d'une capacité disponible sur chaque porteuse offrant une attribution candidate ; et
    - un premier moyen de traitement (104) agencé pour : recevoir dudit moyen arithmétique (109) lesdites valeurs calculées de ladite quantité relative à une interférence et de la capacité disponible ; identifier sur chaque porteuse l'attribution qui affiche la meilleure caractéristique d'interférence en termes de valeurs calculées de ladite quantité relative à une interférence ; et pour sélectionner comme l'attribution actuelle, parmi les attributions ainsi identifiées, celle offerte par la porteuse ayant l'occupation de ressources maximum.

14. Appareil selon la revendication 13, **caractérisé en ce que** ledit premier moyen de traitement (104) est agencé pour identifier, sur chaque porteuse sur laquelle une attribution candidate est disponible et sur la base de ladite première valeur générale et de ladite valeur moyenne de ladite quantité relative à une interférence, une attribution candidate qui est la meilleure en termes d'interférence des intervalles de temps concernés, et pour sélectionner, pour l'attribution actuelle au service, la porteuse supportant la meilleure attribution candidate affichant la meilleure caractéristique d'interférence en termes de ladite deuxième valeur générale de ladite quantité relative à une interférence et minimisant la capacité disponible résiduelle sur la porteuse.

15. Appareil selon la revendication 13 ou 14, **caractérisé en ce qu'**il comprend en outre un deuxième moyen de traitement (108) connecté audit moyen arithmétique (109) et audit premier moyen de traitement (104) et agencé pour traiter des informations à propos des capacités de l'équipement de l'utilisateur, ledit moyen arithmétique (109) étant agencé pour calculer lesdites valeurs de ladite quantité relative à une interférence en prenant en compte les capacités de l'équipement de l'utilisateur.

16. Appareil selon l'une quelconque des revendications 13 à 15, **caractérisé en ce que** ladite quantité relative à une interférence est la priorité.

17. Appareil selon l'une quelconque des revendications 13 à 16, **caractérisé en ce que** ledit premier moyen de traitement (104) est agencé également pour : évaluer, à réception d'une demande d'attribution de canal provenant d'un utilisateur, l'affaiblissement sur le trajet des utilisateurs actifs et de l'utilisateur demandeur ; identifier les utilisateurs actifs à faible affaiblissement sur le trajet avec un affaiblissement sur le trajet suffisamment inférieur à celui de l'utilisateur demandeur ; sélectionner parmi lesdits utilisateurs un utilisateur candidat à un transfert sur un canal de priorité inférieure ; et si le canal sélectionné pour attribution à l'utilisateur demandeur implique l'utilisation de ressources déjà utilisées par l'utilisateur à faible affaiblissement sur le trajet, rechercher une nouvelle attribution pour l'utilisateur à faible affaiblissement sur le trajet, afin de mettre lesdites ressources à la disposition de l'utilisateur demandeur.

FIG. 1

**FIG. 2**

**FIG. 3**

400

401

402

403

404

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5956642 A
- EP 1198964 A
- EP 1204287 A
- US 2001038630 A
- EP 1361789 A

**Non-patent literature cited in the description**

- **Y. FURUYA ; Y. AKAIWA.** Channel Segregation, a Distributed Adaptive Channel Allocation Scheme for Mobile Communication Systems. *IEICE Transactions,* June 1991, vol. E 74 (6), 1531-1537